**Europäisches Patentamt**

**European Patent Office**

**Office européen des brevets**

(11) Veröffentlichungsnummer: **0 202 446**
**B1**

# EUROPÄISCHE PATENTSCHRIFT

(45) Veröffentlichungstag der Patentschrift:
**27.12.90**

(21) Anmeldenummer: **86104736.3**

(22) Anmeldetag: **07.04.86**

(51) Int. Cl.⁵: **G06F 1/00**

(54) **Neigevorrichtung für Sichtgeräte.**

(30) Priorität: 15.04.85 DE 3513459
23.09.85 DE 3533910

(43) Veröffentlichungstag der Anmeldung:
**26.11.86 Patentblatt 86/48**

(45) Bekanntmachung des Hinweises auf die Patenterteilung:
**27.12.90 Patentblatt 90/52**

(84) Benannte Vertragsstaaten:
**DE FR GB SE**

(56) Entgegenhaltungen:
**EP-A- 0 041 804**
**DE-C- 3 403 821**
**US-A- 4 494 720**

**IBM TECHNICAL DISCLOSURE BULLETIN, Band 27, Nr. 8, Januar 1985, Seiten 4886-4887, New York, US; A.R. COX et al.: "Tilt and rotate device for CRT display"**
**IBM TECHNICAL DISCLOSURE BULLETIN, Band 24, Nr. 1A, Juni 1981, Seiten 186-187, New York, US; L.H. LOWRIE et al.: "Adjustable tilt mechanism for data-entry terminal"**

(73) Patentinhaber: **Siemens Aktiengesellschaft,
Wittelsbacherplatz 2, D-8000 München 2(DE)**

(72) Erfinder: **Hudek, Anton, Ludwigstrasse 21,
D-7515 Linkenheim(DE)**
Erfinder: **von Vietinghoff, Joachim, Dipl.-Ing.,
Belchenstrasse 16, D-7505 Ettlingen(DE)**

## Beschreibung

Die Erfindung betrifft eine Neigevorrichtung für Sichtgeräte gemäß dem Oberbegriff des Anspruchs 1.

Aus der DE-PS 3 403 821 ist eine Vorrichtung zur Aufnahme eines Sichtgerätes bekannt, das eine kalottenartig ausgeformte, den Boden des Sichtgerätes bildende Trägerplatte aufweist, die dreh- und schwenkbar auf einem Trägerelement angeordnet ist. Zum Neigen des Sichtgerätes wird ein Gleitelement in einem Verschwenkschlitz der Trägerplatte verschoben. Durch die kalottenartig ausgeformte Trägerplatte kann diese mit dem Sichtgerät geneigt und geschwenkt werden, wobei eine Neigung um die Längsachse des Sichtgerätes gesperrt ist.

Aus der Druckschrift "IBM — Technical Disclosure Bulletin", Vol. 24, No. 1A, June 1981 ist eine Neigevorrichtung für Sichtgeräte mit einem Sockel bekannt, der eine konkave zylindrische Gleitfläche aufweist. An der Unterseite des Sichtgerätes befindet sich eine Kufe, mit der das Sichtgerät auf die Gleitfläche des Sockels aufgesetzt ist. Das Sichtgerät kann daher um eine horizontale, parallel zum Bildschirm verlaufende Achse geneigt werden. Damit das Sichtgerät nicht unbeabsichtigt von der Neigevorrichtung abgehoben werden kann, ist in der Gleitfläche des Sockels ein Zapfen mit seitlichen Ansätzen vorgesehen, der in einen Schlitz in der Gleitfläche der Kufe eingreift. Dieser weist an einem Ende Ausnehmungen auf, so daß, wenn das Sichtgerät in die eine Endstellung geneigt ist, das Sichtgerät abgenommen bzw. in dieser Stellung aufgesetzt werden kann. Allerdings kann das Sichtgerät in dieser Stellung auch unbeabsichtigt abgehoben werden.

Der vorliegenden Erfindung liegt die Aufgabe zugrunde, eine Neigevorrichtung für Sichtgeräte zu schaffen, die einfach herzustellen ist, gegen unbeabsichtigtes Abheben des Sichtgerätes gesichert ist und die sich leicht und rasch zusammensetzen oder auseinandernehmen läßt.

Erfindungsgemäß wird diese Aufgabe mit den im Anspruch 1 angegebenen Merkmalen gelöst.

Die Schnappfedern können zugleich der Halterung und Führung der Kufe dienen, wobei zu jeder Feder in einem Schlitz eine entgegengerichtete im anderen Schlitz angeordnet ist. Eine bessere Führung läßt sich jedoch mit gesonderten festen Führungsstegen erzielen. Die Schnappfedern dienen dann nur zur Halterung.

Die erfindungsgemäße Vorrichtung kann dadurch zu einer drehbaren Neigevorrichtung erweitert werden, daß der Sockel eine ringförmige horizontale Platte aufweist, die auf einer feststehenden kreisförmigen Grundplatte aufliegt. Der Sockel oder die Grundplatte enthält in der Mitte einen zylindrischen Zentrieransatz, der in eine kreisförmige Öffnung der Grundplatte bzw. des Sockels eingreift. In Ausnehmungen des Zentrieransatzes sind Schnappfedern angeordnet, die in einen überstehenden Rand der ringförmigen Öffnung einrasten. Sockel und Grundplatte können dann um ihre Mittelachsen gegeneinander verdreht werden.

Anhand der Zeichnung werden im folgenden die Erfindung sowie weitere Ausgestaltungen und Ergänzungen näher beschrieben und erläutert.

Die Figuren 1 und 2 veranschaulichen ein Ausführungsbeispiel der Erfindung und

Figur 3 zeigt einen Aufsatz, mit dem die Höhe des Sichtgerätes verändert werden kann.

In Figur 4 ist ein Ausführungsbeispiel dargestellt, das zur Aufnahme von Sichtgeräten mit unterschiedlich geformten Unterseiten geeignet ist.

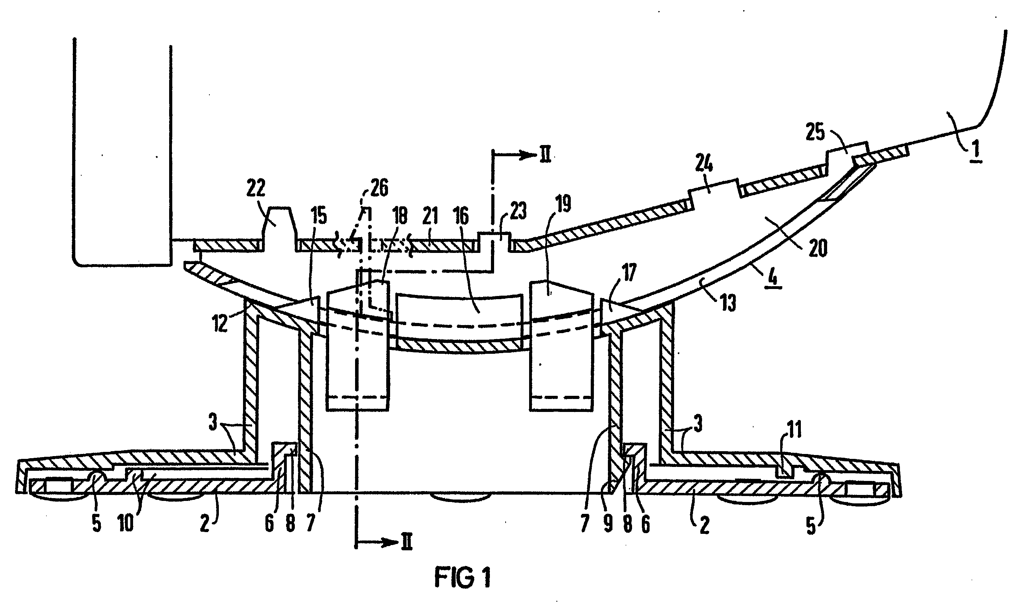

In Figur 1 ist mit 1 ein Sichtgerät bezeichnet, das zur Anpassung an Größe und Position einer Bedienungsperson neig- und schwenkbar ist. Hierzu sitzt es auf einer Vorrichtung, die im wesentlichen aus drei Teilen besteht, einer Grundplatte 2, einem Sockel 3 und einer Kufe 4. Der Sockel 3 ruht auf einem ringförmigen Wulst 5 der ringförmigen Grundplatte 2. Diese weist in der Mitte eine kreisförmige Öffnung mit einem Ring 6 auf, durch den ein Zentrieransatz 7 des Sockels geführt ist. Der Ring ist mit einem überstehenden Rand 8 versehen, in den Schnappfedern 9 einrasten, die in Ausnehmungen des Zentrieransatzes 7 angeordnet und über dessen Umfang verteilt sind. Der Sockel 3 ist somit zusammen mit dem Sichtgerät 1 um die Mittelachse des Zentrieransatzes 7 drehbar, wobei der Sockel 3 auf dem Wulst 5 gleitet. Ein mit der Grundplatte 2 verbundenes Ringsegment 10 begrenzt in Verbindung mit einem Anschlag 11 am Sockel den Drehwinkel.

Die Grundplatte und die Konsole können durch einfaches Aufeinanderdrücken miteinander verbunden werden, wobei die Schnappfedern 9 einrasten, so daß die beiden Teile in jeder Drehstellung miteinander verbunden sind und nicht unbeabsichtigt getrennt werden können. Durch die Öffnung in der Grundplatte sind die Schnappfedern jedoch zugänglich, so daß man sie zurückdrücken und die beiden Teile voneinander lösen kann.

Der Sockel weist an seiner Oberseite eine zylindrische konkave Gleitfläche 12 auf, auf der die Kufe 4 aufliegt. Zur Führung der Kufe sind in deren Gleitfläche zwei in Umfangsrichtung verlaufende Schlitze 13, 14 vorgesehen, in die Führungsstege 15, 16, 17 eingreifen, die aus der Gleitfläche 12 des Sockels 3 herausragen. Zwischen den Führungsstegen 15, 16, 17 sind Schnappfedern 18, 19 angeordnet, die hinter der Gleitfläche der Kufe 4 einrasten. Dabei sind die Nasen gegenüberliegender Schnappfedern 18, 18' gegeneinander gerichtet. Auch Kufe und Sockel können daher durch einfaches Aufeinanderdrücken miteinander verbunden werden.

Die Kufe hat seitlich zwei Wangen 20, 20', auf denen eine Befestigungsplatte 21 für das Sichtgerät 1 aufliegt und über die das Gewicht des Sichtgerätes auf die Kufe 4 geleitet wird. Die Befestigungsplatte 21 kann an den Boden des Sichtgerätes angeschraubt sein; zweckmäßig bildet sie aber selbst den Boden. Jede Wange ist an ihrem oberen Rand mit Zapfen 22, 23, 24 versehen, die in Löcher der Befestigungsplatte eingreifen. Mit Haken 25 ist die Kufe in weitere Öffnungen der Befestigungsplatte 21 eingehängt. Eine Schnappfeder 26, die an der Oberseite der Gleitfläche der Kufe befestigt ist, rastet in eine Öffnung in der Befestigungsplatte 21 ein. Damit ist die gesamte drehbare Neigevorrichtung mit dem Sichtgerät verbunden. Durch einen Schlitz in der Gleitfläche der Kufe kann die Schnappfeder 26 zurückgedrückt werden und damit das Sichtgerät von der Neigevorrichtung abgehoben werden. Es sind dann die Schnappfedern 18 und 19 zugänglich, so daß auch die Kufe vom Sockel gelöst werden kann.

Die drei Teile Grundplatte 2, Sockel 3 und Kufe 4 können im Spritzgußverfahren hergestellt sein und sind durch einfaches Aufeinanderdrücken miteinander verbunden. In keiner Neigungs- oder Drehstellung kann sich ein Teil vom anderen lösen oder das Sichtgerät unabsichtlich abgehoben werden. Dennoch ist das Trennen der Teile voneinander und vom Sichtgerät sehr einfach.

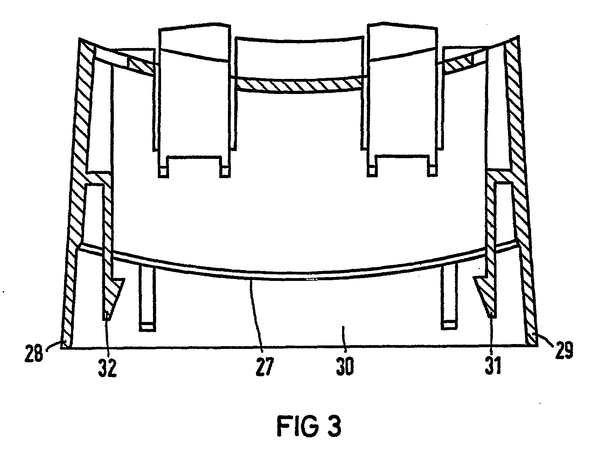

Häufig ist es vor allem aus ergonomischen Gründen erforderlich, ein Sichtgerät höher zu setzen, da ein zu starkes Neigen nach hinten, z. B. wegen der Spiegelung von Deckenleuchten im Bildschirm, unerwünscht ist. In Figur 3 ist ein Aufsatz für den Sockel dargestellt, mit dem die Höhe des Sockels vergrößert werden kann. Seine Oberseite ist wie die des Sockels mit einer zylindrischen Gleitfläche, mit Führungsstegen und Schnappfedern ausgestattet, so daß die Kufe in gleicher Weise wie auf den Sockel aufgesetzt werden kann. Die Unterseite 27 ist konvex zylindrisch gestaltet, und liegt beim Aufsetzen auf den Sockel auf dessen zylindrischer Oberfläche auf. Mit den herabgezogenen Seitenflächen 28, 29, 30 (die vierte Seitenfläche ist in Figur 3 nicht sichtbar) kann der Aufsatz über den Sockel gestülpt werden, so daß er auf diesem einen festen Sitz hat. Mit Schnappfedern 31, 32, die in Öffnungen in der zylindrischen Oberfläche des Sockels einrasten, werden die beiden Teile miteinander verbunden. Auch der Sockelaufsatz kann im Spritzgußverfahren hergestellt sein.

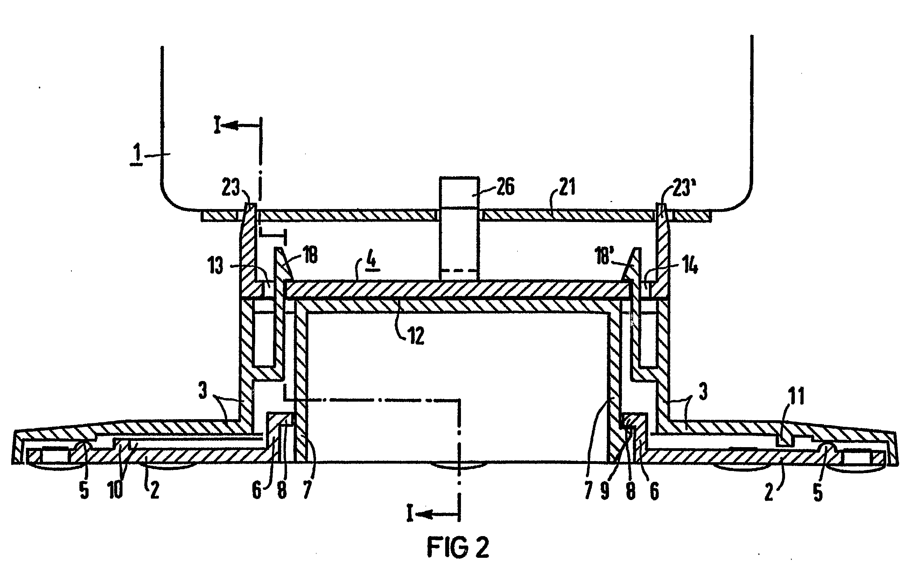

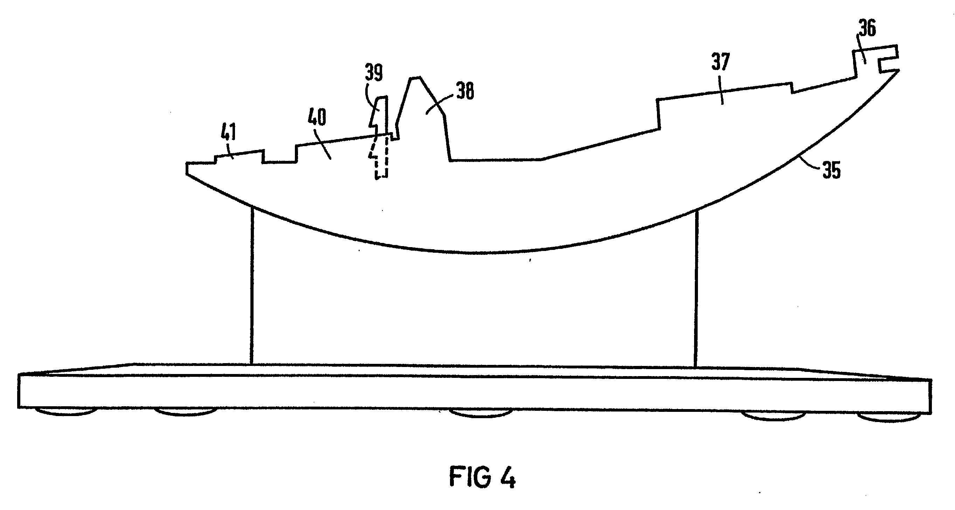

Die Ausbildung der Kufe mit den seitlichen Wangen hat außer einer einfachen Herstellung den Vorteil, daß sie zur Aufnahme von Sichtgeräten unterschiedlich geformter Unterseite geeignet ist. Figur 4 zeigt eine Neigevorrichtung mit einer Kufe, deren Wangen so ausgebildet sind, daß Sichtgeräte mit planer oder mit geknickter Unterseite aufgesetzt werden können. Hierzu sind Auflageansätze 37, 40, 41 vorgesehen, auf denen die Sichtgeräte mit ihrer planen Unterseite aufliegen. Ein Zapfen 38 greift in einen Schlitz der Sichtgeräteunterseite ein und sichert damit das Sichtgerät gegen Verschieben. Eine Schnappfeder 39 weist zwei Nasen auf, von denen im Falle eines Sichtgerätes mit planer Unterseite die obere in eine Öffnung im Boden des Sichtgerätes einrastet. Im Falle von Sichtgeräten mit geknickter Unterseite greifen die Ansätze 37, 40, 41 sowie der Zapfen 38 in die Unterseite des Sichtgerätes ein, so daß dieses - wie in den Ausführungsbeispielen nach den Figuren 1 und 2 - auf der Kufe 35 aufsitzt. Dabei rastet die untere Nase der Schnappfeder 39 in eine Öffnung in der Sichtgeräteunterseite ein.

**Patentansprüche**

1. Neigevorrichtung für Sichtgeräte
– mit einem Sockel mit einer konkaven Gleitfläche,
– mit einem am Boden des Sichtgerätes befestigten Teil, das mit einer konvexen Gleitfläche auf der konkaven Gleitfläche des Sockels sitzt, wobei die Gleitflächen gegeneinander verschiebbar sind,
– mit Rastelementen, die aus der einen Gleitfläche herausragen und durch einen Schlitz in der anderen Gleitfläche greifen und auf deren Rückseite einrasten, dadurch gekennzeichnet,
– daß die Gleitflächen zylindrisch sind,
– daß in der anderen Gleitfläche ein Paar in Umfangsrichtung verlaufender Schlitze (13, 14) vorhanden ist,
– daß aus der einen Gleitfläche (12) in radiale Richtung Schnappfedern (18, 19) ragen, die durch die Schlitze (13, 14) greifen und auf deren Rückseite einrasten, wobei die Nasen der in den einen Schlitz (13) eingreifenden Schnappfedern (18, 19) entgegengesetzt den Nasen der in den anderen Schlitz (14) eingreifenden Schnappfedern (18′) gerichtet sind,
– und daß aus der einen Gleitfläche (12) Führungsstege (15, 16, 17) herausragen, die in die Schlitze (13, 14) der anderen Gleitfläche greifen.

2. Vorrichtung nach Anspruch 1, dadurch gekennzeichnet, daß das am Boden des Sichtgerätes befestigte Teil als Kufe (4) ausgebildet ist, und daß die Kufe (4) auf der der Gleitfläche abgewandten Seite ein Paar Haken (25), die in Öffnungen einer am Sichtgerät (1) angebrachten Befestigungsplatte (21) eingreifen, und mindestens eine Schnappfeder (26) aufweist, die in einen Schlitz der Befestigungsplatte (21) einrastet.

3. Vorrichtung nach einem Anspruch 2, **dadurch gekennzeichnet**, daß die Kufe zu beiden Seiten der Gleitfläche Wangen (20, 20') aufweist, deren oberer Rand zu den Haken (25) und zu Auflageflächen für die Befestigungsplatte (21) ausgebildet ist.

4. Vorrichtung nach einem der Ansprüche 1 bis 3, **dadurch gekennzeichnet**, daß der Sockel (3) eine ringförmige horizontale Platte aufweist, die auf einer feststehenden ringförmigen Grundplatte (2) aufliegt, daß der Sockel oder die Grundplatte einen zylindrischen Zentrieransatz (7) aufweist, der in die kreisförmige Mittelöffnung der Grundplatte bzw. des Sockels eingreift, und daß im Zentrieransatz (7) Ausnehmungen vorhanden sind, in denen Schnappfedern (9) angeordnet sind, die in die kreisförmige Öffnung einrasten.

5. Vorrichtung nach Anspruch 4, **dadurch gekennzeichnet**, daß an der kreisförmigen Öffnung ein Ring (6) mit einem Rand (8) vorgesehen ist in den die Schnappfedern (9) einrasten.

6. Vorrichtung nach Anspruch 4 oder 5, **dadurch gekennzeichnet**, daß die ringförmige Platte des Sockels (3) oder die Grundplatte (2) in der Nähe des Randes mit einem ringförmigen Wulst (5) versehen sind, auf dem bzw. mit dem der Sockel auf der Grundplatte aufliegt.

7. Vorrichtung nach einem der Ansprüche 1 bis 6, **dadurch gekennzeichnet**, daß der Sockel (3) mit einem Aufsatz verlängerbar ist, dessen Oberseite wie die Oberseite des Sockels zur Aufnahme des am Boden Sichtgerätes befestigten Teiles (4) ausgebildet ist.

8. Vorrichtung nach Anspruch 7, **dadurch gekennzeichnet**, daß die Unterseite des Aufsatzes (27) zur Auflage auf die Oberseite des Sockels konvex zylindrisch ausgebildet ist und daß Schnappfedern (31, 32) vorhanden sind, die bei aufgesetztem Aufsatz in Öffnungen in der zylindrischen Oberseite des Sockels einrasten.

## Claims

1. A tilting device for display apparatus
   – with a base with a concave sliding face,
   – with a part secured to the base of the display apparatus, which apparatus sits with a convex sliding face on the concave sliding face of the base, wherein the sliding faces are able to be displaced against each other,
   – with locking elements, which project from the one sliding face and grip through a slot in the other sliding face and lock onto its rear side, characterised in that
   – the sliding faces faces are cylindrical
   – that a pair of slots (13, 14) extending in the peripheral direction is present in the other sliding face,
   – that from the one sliding face (12) catch springs (18, 19) project in the radial direction, which grip through the slots (13, 14) and lock on the rear side, wherein the lugs of the catch springs (18, 19) engaging in the one slot (13) are directed against the lugs of the catch springs (18') engaging in the other slot (14),
   – and that guide rods (15, 16, 17) project from the one sliding face (12) which grip into the slots (13, 14) of the other sliding face.

2. A device according to claim 1, characterised in that the part secured on the base of the display apparatus is constructed as a skid (4) and that the skid (4) has, on the side facing away from the sliding face, a pair of hooks (25), which hooks engage in the openings of a securing plate (21) attached to the display apparatus (1), and at least one catch spring (26), which locks into a slot of the securing plate (21).

3. A device according to claim 2, characterised in that the skid has side parts (20, 20') at both sides of the sliding face, the upper edge of which side parts is constructed towards hooks (25) and towards bearing faces for the securing plate (21).

4. A device according to claims 1 to 3, characterised in that the base (3) has an annular horizontal plate, which rests on a stationary annular base plate (2), in that the base or the base plate has a cylindrical centering stop (7), which engages into the circular central opening of the base plate or the base, and in that in the centering stop (7) recesses are present, in which catch springs (9) are arranged which lock into the circular opening.

5. A device according to claim 4, characterised in that on the circular opening is provided a ring (6) with an edge (8), into which the catch springs (9) lock.

6. A device according to claim 4 or 5, characterised in that the annular plate of the base (3) or the base plate (2) are provided, in the vicinity of the edge, with an annular bead (5) on which, or with which, the base rests on the base plate.

7. A device according to one of claims 1 to 6, characterised in that the base (3) is able to be extended with a top unit, the upper side of which is constructed like the upper side of the base for accommodating the part secured on the base of the display apparatus.

8. A device according to claim 7, characterised in that the unerside of the top unit (27) is constructed in a convex cylindrical manner on the upper side of the base and in that catch springs (31, 32) are present, which lock, when the top unit is placed, into openings in the cylindrical upper side of the base.

## Revendications

1. Dispositif d'inclinaison pour des appareils de visualisation, comportant
   - un socle possédant une surface de glissement concave,
   - une partie, fixée an fond de l'appareil de visualisation et reposant par une surface de glissement convexe sur la surface de glissement concave du socle, les surfaces de glissement pouvant être déplacées l'une par rapport à l'autre,
   - des éléments à encliquetage qui font saillie à partir d'une première surface de glissement et s'engagent dans une fente ménagée dans l'autre surface de glissement et s'encliquettent sur le côté arrière de cette surface de glissement, caractérisé par le fait
   - que les surfaces de glissement sont cylindriques,
   - que dans l'autre surface de glissement est ménagé un couple de fentes (13, 14) qui s'étendent dans la direction circonférentielle,
   - qu'à partir de la première surface de glissement (12) font saillie, dans la direction radiale, des ressorts à encliquetage brusque (18, 19), qui s'engagent dans les fentes (13, 14) et s'encliquettent en arrière de ces fentes, les becs des ressorts à encliquetage brusque (18, 19), qui s'engagent dans une fente (13), étant dirigés en sens opposés des becs des ressorts à encliquetage brusque (18') qui s'engagent dans l'autre fente, et
   - qu'à partir de la première surface de glissement (12) font saillie des barrettes de guidage (15, 16, 17), qui s'engagent dans les fentes (13, 14) de l'autre surface de glissement.

2. Dispositif suivant la revendication 1, caractérisé par le fait que la partie située dans le fond de l'appareil de visualisation est réalisée sous la forme d'un patin (4) et que le patin (4) possède, sur le côté tourné à l'opposé de la surface de glissement, un couple de crochets (25), qui pénètrent dans des ouvertures d'une plaque de fixation (21) montée sur l'appareil de visualisation (1), et au moins un ressort à encliquetage brusque (26) qui s'encliquette dans une fente de la plaque de fixation (21).

3. Dispositif suivant la revendication 2, caractérisé par le fait que le patin comporte, des deux côtés de la surface de glissement, des flasques (20, 20'), dont le bord supérieur est agencé de manière à former les crochets (25) et les surfaces d'application pour la plaque de fixation (21).

4. Dispositif suivant l'une des revendications 1 à 3, caractérisé par le fait que le socle (3) possède une plaque horizontale annulaire qui s'applique sur une plaque de base annulaire fixe (2), que le socle de la plaque de base possède un embout cylindrique de centrage (7) qui s'engage dans l'ouverture centrale circulaire de la plaque de base du socle et que dans l'embout de centrage (7) sont ménagés des évidements dans lesquels sont disposés les ressorts à encliquetage brusque (9), qui s'encliquettent dans l'ouverture circulaire.

5. Dispositif suivant la revendication 4, caractérisé par le fait que sur le bord de l'ouverture circulaire est prévu un anneau (6) possédant un bord (8), dans lequel s'encliquettent les ressorts à encliquetage brusque (9).

6. Dispositif suivant la revendication 4 ou 5, caractérisé par le fait que la plaque annulaire du socle (3) ou la plaque de base (2) comporte, à proximité du bord, un rebord annulaire (5), au moyen duquel le socle s'applique contre la plaque de base.

7. Dispositif suivant l'une des revendications 1 à 6, caractérisé par le fait que le socle (3) peut être prolongé par une coiffe dont la face supérieure est réalisée comme la face supérieure du socle pour recevoir la partie (4) fixée sur le fond de l'appareil de visualisation.

8. Dispositif suivant la revendication 7, caractérisé par le fait que la face inférieure de la coiffe (27) est agencée avec une forme cylindrique convexe de manière à s'appliquer sur la face supérieure du socle et qu'il est prévu des ressorts à encliquetage brusque (31, 32), qui, lorsque la coiffe est mise en place, s'encliquettent dans des ouvertures ménagées dans la face supérieure cylindrique du socle.

FIG 1

EP 0 202 446 B1

FIG 2

FIG 3

FIG 4